# EUROPEAN PATENT SPECIFICATION

(11) **EP 1 752 313 B1**
(45) Date of publication and mention of the grant of the patent: **28.11.2007**
(21) Application number: 05017417.6
(22) Date of filing: 10.08.2005
(51) Int. Cl.: B60B 7/12

(54) **Fitting structure of vehicle wheel cover**
Befestigung für eine Radabdeckung
Fixation pour garde-boue

(43) Date of publication of application: 14.02.2007
(73) Proprietor: Lin, Rocky, Taipei City T'ai pei 110 (TW)
(72) Inventor: Lin, Rocky, Taipei City T'ai pei 110 (TW)
(74) Representative: Urner, Peter

(56) References cited:
- EP-A- 0 271 038
- GB-A- 1 244 209
- US-A- 5 128 190
- US-A1- 2005 012 383

## Description

### BACKGROUND

The current invention relates in general to a fitting structure of a vehicle wheel cover, and more particularly, to a fitting structure that installs the wheel covers on the wheel disks of large vehicle such as trucks and buses.

US Patent No. 5,128,190 that forms the closest prior art according to the preamble of claim 1 discloses a fixing device for fitting wheel covers on wheel disks of large vehicles such as trucks and buses. The fixing device includes an open loop with two straight ends which are formed with right hand and left hand threads, respectively. The straight ends can thus be joined with each other by a nut. By turning the nut, the diameter of the loop can be adjusted. However, as the nut is engaged with the straight ends by means of threads, a large torque is required for turning the nut. Further, as it is difficult to determine the length of the engaged portions between the nut and the straight ends, disengagement with the loop is unavoidable during adjustment. In addition, the fabrication of a nut with two opposing ends threaded in opposite directions is also difficult.

### BRIEF SUMMARY

A fitting structure for a wheel cover is provided to conveniently adjust with the size of the wheel disk and to easily fit the wheel cover on the wheel disk. The fitting structure also prevents the wheel covers mounted to the wheel disks from being stolen.

### BRIEF DESCRIPTION OF THE DRAWINGS

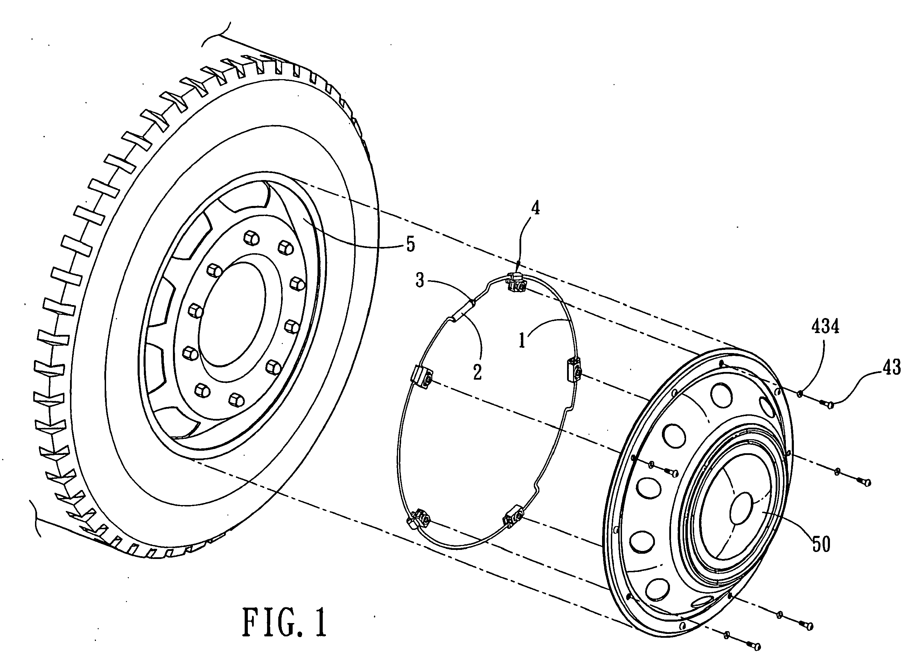

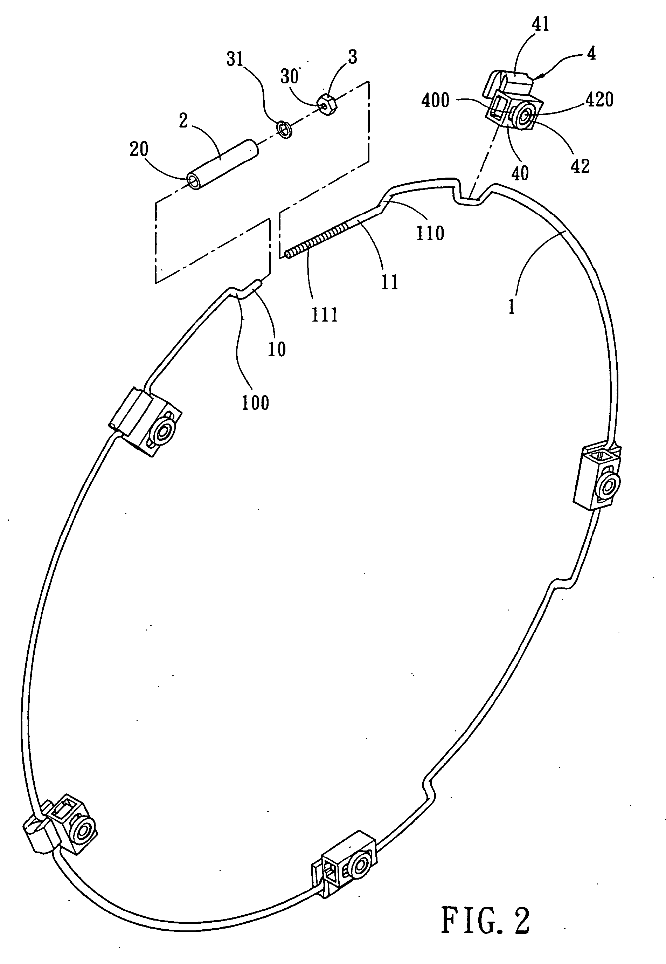

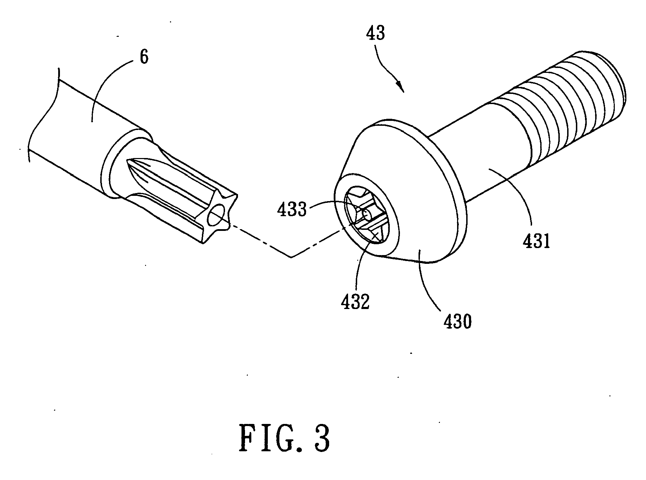

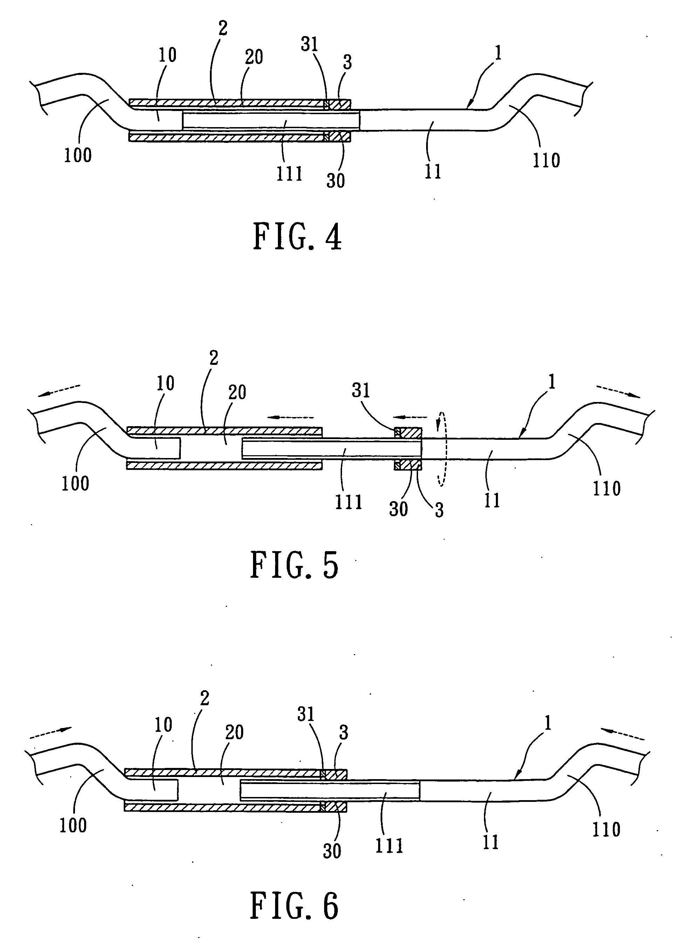

These and other features and advantages of the various embodiments disclosed herein will be better understood with respect to the following description and drawings, in which like numbers refer to like parts throughout, and in which:
[005] Figure 1 illustrates a perspective view of a fitting structure for fitting a wheel cover on a wheel disk;
[006] Figure 2 shows an exploded view of the fitting structure;
[007] Figure 3 shows a specially designed tool used to tighten or loosen the wheel cover with the fitting structure; and
[008] Figures 4 to 6 shows the adjustment of the diameter of the fitting structure;

### DETAILED DESCRIPTION

Figure 1 shows a perspective view of a fitting structure for fitting a wheel cover to a wheel disk, and Figure 2 illustrates an exploded view of the fitting structure. As shown, the fitting structure to be fitted between a wheel disk 5 and a wheel cover 50 includes a loop 1, a connecting cover 2, an adjusting nut 3 and a plurality of fitting seats 4.

The loop 1 includes a bar curved into a substantially circular shape with an opening between two opposing ends, namely, a first end 10 and a second end 11. Therefore, the loopl can be adjusted with various diameters to be fitted to the rims of various types of wheel disks 5. At least one of the first and second ends 10 and 11 is terminated with a bent end. In this embodiment, each of the first and second ends 10 and 11 is terminated with a bent portion 100 and 110, respectively. The first end 10 is shorter than the second end 11, and both the first and second ends 10 and 11 have a straight configuration. In addition, threads 111 are formed on the second end 11.

The connecting cover 2 includes an elongate tubular body movably sheathing the first and second ends 10 and 11. The connecting cover 2 has a hollow channel 20 allowing the first and second ends 10 and 11 inserted therein from two opposing ends of thereof. The adjusting nut 3 includes internal threads 30 to engage with the threads 111 of the second end 11 at one end of the connecting cover 2. Therefore, by turning the adjusting nut 3, the loop 1 can be adjusted with various diameters. A screw spring washer 31 is preferably installed on the second end 11 between the adjusting nut 3 and the connecting cover 2 to provide spring force that avoids the adjusting nut 3 to be loosened from the second end 11.

The fitting seats 4 are mounted to various positions of the loop 1. Each of the fitting seats 4 includes a hollow seat 40, a holding member 41 and a buffer member 42. The seat 40 includes a displacement slot 400 extending therethrough, such that the buffer member 42 attached thereon can extend in the slot 400 and adjust the position thereof. The holding member 41 extends from the hollow seat 40 at a side opposing to the buffer member 42. Preferably, the holding member 41 is fabricated from resilient materials such as rubber that can exert spring force and restore its original shapes while being deformed by external force. The holding member 41 is preferably formed with a U shape such that the loop 1 can be inserted therein and held thereby. The buffer member 42 is perforated with a threaded hole 420, such that a screw member 43 (as shown in Figure 1) can be engaged with the buffer member 42. A rubber washer 434 is preferably applied between the screw member 43 and the buffer member 42. As shown in Figure 1, the wheel cover 50 is formed with a plurality of through holes allowing the screw member 43 to extend through. Thereby, the wheel cover 50 can be mounted to the loop 1 by engaging the screw members 43 with the buffer member 42, which is a part of the fitting seat 4 fitted to the loop 1. When the loop 1 as well as the wheel cover 50 fitted thereto is mounted to the wheel disk 5, the buffer member 42 and the washer 434 provide the buffering effect and absorb vibration, such that the screw hole formed on the wheel cover 50 will not be cracked due to external impact or vibration.

Referring to Figure 3, the screw member 43 may include a bolt or a screw with a head 430 and a threaded rod 43 extending from the head 430. The top of the head 430 is formed with a polygonal or star-like wrench hole 432 of which the center is protruded as a pillar 433 allowing a specifically designed tool 6 (such as a screw driver) to screw or unscrew the screw member 43 with respect to the buffer member 42, so as to tighten or loosen the engagement between the wheel cover 50 and the loop 1. As the wheel cover 50 can only be disengaged or removed from the loop 1 as well as the wheel disk 5 by using the specifically designed tool 6, the wheel cover 50 is thus prevented from being easily stolen.

Referring to Figure 4, the loop 1 has the spring and restoration features, the first and second ends 10 and 11 tend to approach each other. Therefore, by turning and displacing the nut 3, the connecting cover 2 can be pushed to increase the distance between the first and second ends 10 and 11. In this manner, the diameter of the loop 1 is increased. Alternatively, the connecting cover 2 can be pushed to bring the first and second ends 10 and 11 close to each other, such that a smaller diameter of the loop 1 is obtained. When the adjustment of the diameter of the loop 1 is too much, as shown in Figure 5, one can pull the first and second ends 10 and 11 away from each, followed by turning the nut 3 to a desired position. Thereby, the restoration spring force of the loop 1 will then force the first and second ends 10 and 11 approaching each other as shown in Figure 6.

## Claims

1. A fitting structure of a wheel cover (50), comprising:
an open loop (1) having a first end (10) and a second end (11), wherein at least the first end (10) is terminated with a bent portio (100) and the second end (11) is formed with a plurality of external threads (111);
an adjust nut (3) engaged with the external threads (111) of the second end (11);
a plurality of fitting seats (4), each including:
a seat (40) having a displacement slot (400);
a holding member (41) extending from one side of the seat (40) for holding the loop (1) therein;
**characterized in that** it further comprises
a connecting cover (2) movably sheathing the first and second ends (10) and (11), and
a buffer member (42) mounted to the seat (40) at one side opposite to the holding member (41), the buffer member (42) having one end extending into the displacement slot (400) and the other end formed with a threaded hole (420); and
a plurality of screw members (43), each being operative to extend through the wheel cover 50 to engage with one of the buffer members (42).

2. The fitting structure of Claim 1, wherein the screw member (43) having a head (430) recessed with a star-like hole (432).

3. The fitting structure of Claim 2, the top of the head (430) further comprises a pillar (433) protruding from a center of the star-like hole (432).

4. The fitting structure of Claim 1, wherein the first end (10) is shorter than the second end(11).

5. The fitting structure of Claim 1, wherein the second end (11) is terminated with a bent portion (11) on which the threads (111) are formed.

6. The fitting structure of Claim 1, further comprising a washer (31) installed on the loop (1) between the connecting cover (2) and the adjusting nut (3).

7. The fitting structure of Claim 1, wherein the connecting cover (2) includes a hollow elongate channel (20) allowing the first and second ends (10) and (11) inserted therein from two opposing ends thereof.

8. The fitting structure of Claim 1, wherein the holding member (41) includes a resilient U-shaped member for holding the loop (1) inserted therein.

9. The fitting structure of Claim 1, wherein the holding member (41) is fabricated from rubber.

10. The fitting structure of Claim 1, wherein the screw member (43) includes a screw or a bolt.

11. The fitting structure of Claim 1, wherein each of the screw members (43) of the fitting seats (4) further comprises a washer (434).

## Patentansprüche

1. Befestigungsstruktur einer Radabdeckung (50), die umfasst:
eine offene Schleife (1) mit einem ersten Ende (10) und einem zweiten Ende (11), wobei zumindest das erste Ende (10) in einem gebogenen Abschnitt (100) endet und das zweite Ende (11) mit mehreren Außengewinden (111) ausgebildet ist;
eine Einstellmutter (3), die mit den Außengewinden (111) des zweiten Endes (11) in Eingriff ist; und
mehrere Befestigungssitze (4), wovon jeder enthält:
einen Sitz (40) mit einem Verschiebungsschlitz (400);
ein Halteorgan (41), das sich von einer Seite des Sitzes (40) erstreckt,
um die Schleife (1) darin zu halten;
**dadurch gekennzeichnet, dass** sie ferner umfasst:
eine Verbindungsabdeckung (2), die das erste und das zweite Ende (10 bzw. 11) beweglich umhüllt;
ein Pufferorgan (42), das an dem Sitz (40) auf einer Seite gegenüber dem Halteorgan (41) angebracht ist, wobei das Pufferorgan (42) ein in den Verlagerungsschlitz (400) sich erstreckendes Ende besitzt, während sein anderes Ende mit einer Gewindebohrung (420) ausgebildet ist; und
mehrere Schrauborgane (43), wovon jedes so betätigbar ist, dass es sich durch die Radabdeckung (50) erstreckt, um mit einem der Pufferorgane (42) in Eingriff zu gelangen.

2. Befestigungsstruktur nach Anspruch 1, wobei die Schrauborgane (43) einen Kopf (430) besitzen, in dem ein sternförmiges Loch (432) ausgespart ist.

3. Befestigungsstruktur nach Anspruch 2, wobei die Oberseite des Kopfes (430) ferner eine Säule (433) aufweist, die sich von der Mitte des sternförmigen Lochs (432) erstreckt.

4. Befestigungsstruktur nach Anspruch 1, wobei das erste Ende (10) kürzer als das zweite Ende (11) ist.

5. Befestigungsstruktur nach Anspruch 1, wobei das zweite Ende (11) in einem gekrümmten Abschnitt (110) endet, an dem die Gewinde (111) ausgebildet sind.

6. Befestigungsstruktur nach Anspruch 1, die ferner eine Unterlegscheibe (31) umfasst, die an der Schleife (1) zwischen der Verbindungsabdeckung (2) und der Einstellmutter (3) installiert ist.

7. Befestigungsstruktur nach Anspruch 1, wobei die Verbindungsabdeckung (2) einen hohlen länglichen Kanal (20) aufweist, der ermöglicht, dass das erste Ende (10) und das zweite Ende (11) von zwei gegenüberliegenden Enden hiervon eingeführt werden.

8. Befestigungsstruktur nach Anspruch 1, wobei das Haltorgan (41) ein elastisches U-förmiges Organ aufweist, um die darin eingesetzte Schleife (1) zu halten.

9. Befestigungsstruktur nach Anspruch 1, wobei das Halteorgan (41) aus Gummi hergestellt ist.

10. Befestigungsstruktur nach Anspruch 1, wobei das Schrauborgan (43) eine Schraube oder einen Bolzen umfasst.

11. Befestigungsstruktur nach Anspruch 1, wobei jedes Schrauborgan (43) der Befestigungssitze (4) ferner eine Unterlegscheibe (434) umfasst.

## Revendications

1. Une structure de fixation d'un enjoliveur de roue (50) comprenant :
une boucle ouverte (1) ayant une première extrémité (10) et une deuxième extrémité (11), dans laquelle au moins la première extrémité (10) se termine par une section courbée (100) et la deuxième extrémité (11) est formée par une pluralité de filetages externes (111) ; **caractérisée en ce qu'**elle comporte en outre
un manchon de liaison (2) dans lequel la première (10) et la deuxième (11) extrémités s'emboîtent de façon mobile,
un écrou de réglage (3) engrené dans les filetages externes (111) de la deuxième extrémité (11) ;
une pluralité de sièges de fixation (4) comprenant chacun :
un siège (40) équipé d'une fente de déplacement (400) ;
un élément de maintien (41) en prolongement d'un des cotés du siège (40) afin de maintenir la boucle (1) dans ledit siège ; et
un élément tampon (42) fixé sur le siège (40) à un côté opposé à l'élément de maintien (41), l'élément tampon (42) ayant une extrémité se prolongeant dans la fente de déplacement (400) et l'autre extrémité formée d'un trou taraudé (420) ; et
une pluralités d'éléments à vis (43), chacun étant conçu de manière à traverser l'enjoliveur de roue (50) de part en part afin de s'engrener dans l'un des éléments tampons (42).

2. La structure de fixation de la revendication 1, dans laquelle l'élément à vis (43) comporte une tête (430) avec un renfoncement en forme d'étoile (432).

3. La structure de fixation de la revendication 2, dans laquelle le dessus de la tête (430) comporte en outre un téton (433) en saillie au centre du renfoncement en forme d'étoile (432).

4. La structure de fixation de la revendication 1, dans laquelle la première extrémité (10) est plus courte que la deuxième extrémité (11).

5. La structure de fixation de la revendication 1, dans laquelle la deuxième extrémité (11) se termine par une section courbée (110) sur laquelle les filetages (111) sont réalisés.

6. La structure de fixation de la revendication 1, comprenant en outre une rondelle (31) positionnée sur la boucle (1) entre le manchon de liaison (2) et l'écrou de réglage (3).

7. La structure de fixation de la revendication 1, dans laquelle le manchon de liaison (2) comporte un canal (20) allongé et creux destiné à recevoir la première extrémité (10) et la deuxième extrémité (11) s'insérant dans les deux côtés opposés.

8. La structure de fixation de la revendication 1, dans laquelle l'élément de maintien (41) comporte un élément élastique en forme de U destiné à maintenir la boucle (1) insérée dedans.

9. La structure de fixation de la revendication 1, dans laquelle l'élément de maintien (41) est fabriqué en caoutchouc.

10. La structure de fixation de la revendication 1, dans laquelle l'élément à vis (43) comporte une vis ou un écrou.

11. La structure de fixation de la revendication 1, dans laquelle chacun des éléments à vis (43) des sièges de fixation (4) comporte en outre une rondelle (434).
